(19) Europäisches Patentamt

European Patent Office

Office européen des brevets

(11) Veröffentlichungsnummer: **0 551 909 A1**

(12) **EUROPÄISCHE PATENTANMELDUNG**

(21) Anmeldenummer: **93100503.7**

(51) Int. Cl.⁵: **H02P 3/12**

(22) Anmeldetag: **15.01.93**

(30) Priorität: **16.01.92 DE 4200984**

(43) Veröffentlichungstag der Anmeldung:
**21.07.93 Patentblatt 93/29**

(84) Benannte Vertragsstaaten:
**CH DE FR GB IT LI NL**

(71) Anmelder: **SCHRÖCKER, Rainer**
**Obere Burghalde 47**
**W-7250 Leonberg1(DE)**

(72) Erfinder: **SCHRÖCKER, Rainer**
**Obere Burghalde 47**
**W-7250 Leonberg1(DE)**

(74) Vertreter: **Patentanwälte Dipl.-Ing. W.**
**Scherrmann Dr.-Ing. R. Rüger**
**Webergasse 3 Postfach 348**
**W-7300 Esslingen (Neckar) (DE)**

(54) **Bremsschaltung mit verminderter Belastung des Bremswiderstandes.**

(57) Eine Bremsschaltung zum Bremsen eines Universalmotors enthält eine Umschalteinrichtung zum Umpolen der Polarität zwischen Feldwicklung (6) und Anker (3) für den Bremsbetrieb. Im Bremsbetrieb besteht eine Serienschaltung aus dem Anker (3), der Feldwicklung (6) sowie einem elektronischen Schalter (35), über den periodisch wiederkehrend der Anker (3) mit der Feldwicklung (6) verbunden wird. Die kinetische Energie des Ankers (3) wird beim Bremsen im wesentlichen in einem Bremswiderstand (32) in Wärme umgesetzt. Durch geeignete Maßnahmen wird dafür gesorgt, daß die Leistung, die von dem Bremswiderstand (32) umgesetzt wird, weniger schnell als proportional zur Drehzahl sinkt, was es ermöglicht, bei vorgegebener Bremszeit mit schwächer dimensionierten Bremswiderständen auszukommen.

Fig. 1

Die Erfindung betrifft eine getaktete Schaltungsanordnung von eine geteilte oder ungeteilte Feldwicklung, einen Kollektor sowie einen Anker aufweisenden Motoren, mit den Merkmalen des Oberbegriffs des Anspruches 1.

Aus der Patentanmeldung P 40 22 637 ist eine getaktete Bremsschaltung für kleine Universalmotoren bis ca. 3 kW bekannt, die einen Anker und eine Feldwicklung aufweisen. Mit Hilfe einer Umpoleinrichtung wird die Phasenlage der Feldwicklung gegenüber dem Anker verpolt, um nach dem Motorbetrieb eine Phasenlage der Feldwicklung zu erhalten, die eine Selbsterregung ermöglicht. In Serie mit der Reibenschaltung aus dem Anker und der Feldwicklung liegt ein Leistungshalbleiter, der mit Hilfe einer Steuerschaltung getaktet ein- und ausgeschaltet wird. Die Steuerschaltung gibt an den Leistungshalbleiter ein pulsweitenmoduliertes Signal ab und enthält hierzu einen Oszillator, in den zur Steuerung der Pulsweite ein Signal eingespeist wird, das an einem Stromfühler im Bremskreis abgegriffen wird.

Da die an dem Stromfühlerwiderstand abgegriffene Spannung während des gesamten Bremsverlaufes mit einem festen Schwellenwert verglichen wird, der sich aus der Flußspannung der Basis-Emitter-Strecke eines bipolaren Transistors ergibt, wird bei der bekannten Schaltung mit konstantem Erregerstrom gebremst. Weil sich gleichzeitig während der Bremsung die Ankerspannung vermindert, fällt mit sinkender Drehzahl die Leistung, die an dem Bremswiderstand in Wärme umgesetzt wird. Die höchste Verlustleistung muß der Bremswiderstand unmittelbar nach Bremsbeginn verkraften und er muß dementsprechend dimensioniert werden.

Ausgehend hiervon ist es Aufgabe der Erfindung, eine Bremsschaltung zu schaffen, bei der ohne Verlängerung der Bremszeit der Bremswiderstand hinsichtlich seiner Verlustleistung schwächer dimensioniert werden kann.

Diese Aufgabe wird erfindungsgemäß durch die Bremsschaltung mit den Merkmalen des Anspruches 1 gelöst.

Weil bei der neuen Lösung die von dem Bremswiderstand umgesetzte Leistung mit der Zeit weniger schnell gegen null geht als linear, bleibt die Leistung am Bremswiderstand gegen Ende der Bremsung auf einem höheren Niveau. Dadurch ist es möglich, Bremswiderstände mit geringerer Verlustleistung zu verwenden, weil zu Beginn der Bremsung mit geringer Leistung gebremst werden kann und der dadurch eintretende Verlust an Verzögerung der Ankerdrehzahl bei niedrigen Drehzahlen wieder gutgemacht wird. Dadurch entsteht, bruttomäßig betrachtet, dieselbe Bremszeit wie bei einer Anordnung, bei der die Bremsleistung proportional mit der Drehzahl sinkt, ohne daß aber zu Bremsbeginn die einer solchen Schaltung eigenen hohen Verlustleistungen am Bremswiderstand auftreten. Im Extremfall kann die maximale Verlustleistung am Bremswiderstand etwa halbiert werden. Der dadurch erzielte Vorteil ist erheblich, weil ohmsche Widerstände mit der hier in Frage kommenden erforderlichen Belastbarkeit zu einem für die Schaltung kostenbestimmenden Bauelement werden. Dabei wird von dem Platzbedarf eines solchen Bauelementes zunächst einmal ganz abgesehen.

Die neue Schaltung läßt sich in allen Anordnungen verwenden, bei denen der Erregerstrom infolge des getakteten Betriebs des im Bremsstromkreis liegenden elektronischen Bauelementes getaktet wird. Bei solchen Schaltungen läßt sich die Erregung des Motors auf einfache Weise in weiten Grenzen beliebig variieren und damit weitgehend unabhängig von der Drehzahl die Ankerspannung im oberen Drehzahlbereich absenken und im unteren Drehzahlbereich anheben, damit über nahezu den gesamten Drehzahlbereich eine konstante Belastung des Bremswiderstandes zustandekommt.

Um die gewünschte Charakteristik zu erhalten, sind zwei unterschiedliche Lösungen möglich. Die eine besteht darin, als Abschaltkriterium für die Steuerschaltung eine Spannung zu verwenden, die sich zusammensetzt aus einer dem Erregerstrom proportionalen Spannung zuzüglich einem variablen Anteil, der proportional ist zu der an dem Bremswiderstand anstehenden mittleren Spannung. Hierdurch wird mit fortschreitender Bremsung quasi der Schwellenwert im Sinne eines höheren Brems-/Erregerstroms verschoben, wodurch die Ankerspannung weniger schnell als proportional mit der Drehzahl fällt. Dementsprechend kann bei niedrigen Drehzahlen mit Hilfe des Festwiderstandes mehr kinetische Energie in Wärme umgesetzt werden als bei konstantem Erregerstrom, womit im oberen Drehzahlbereich eine weniger starke Bremsung notwendig ist, um zum gleichen Ergebnis zu kommen, wie es bei Bremsung mit drehzahlproportional sinkender Ankerspannung der Fall ist.

Die andere Lösung besteht darin, einen im Tastverhältnis modulierten Oszillator zu verwenden, bei dem entweder die Ausschaltzeit des Leistungshalbleiters oder die Periodendauer konstant gehalten wird, wobei das Umschaltkriterium mit Hilfe eines gleitenden Schwellenwertes erhalten wird, der sich aus der zeitlichen Integration der an dem Bremswiderstand abfallenden Spannung ergibt.

Im übrigen sind Weiterbildungen der Erfindung Gegenstand von Unteransprüchen.

In der Zeichnung sind Ausführungsbeispiele des Gegenstandes der Erfindung dargestellt. Es zeigen:

Fig. 1    eine Schaltungsanordnung zum Bremsen eines Universalmotors,

Fig. 2    das Prinzipschaltbild des in den Bremsbetrieb umgeschalteten Universalmotors nach Fig. 1 unter Weglassung aller Bauelemente, die zum Umschalten bzw. im Motorbetrieb erforderlich sind und mit einem detaillierten Schaltbild der Steuerschaltung,

Fig. 3    ein anderes Ausführungsbeispiel einer Schaltungsanordnung zum Bremsen eines Universalmotors mit Hilfe eines im Tastverhältnis gesteuerten Oszillators, wobei lediglich die im Bremsbetrieb wirksamen Bauelemente veranschaulicht sind und

Fig. 4    ein Ausführungsbeispiel einer Schaltungsanordnung zum Bremsen eines Universalmotors mit konstantem Feldstrom, wobei lediglich die im Bremsbetrieb wirkenden Bauelemente veranschaulicht sind.

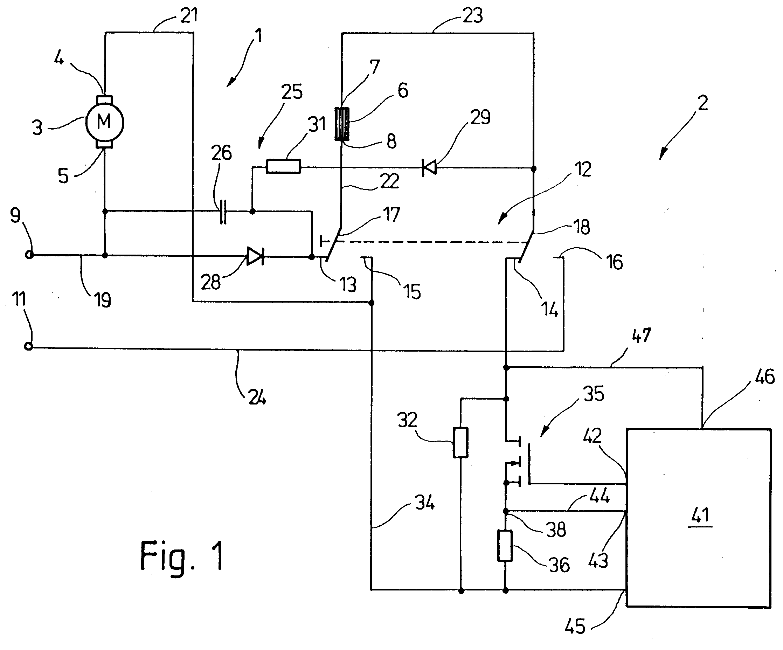

Fig. 1 zeigt einen Universalmotor 1, an den eine Schaltungsanordnung 2 zum netzunabhängigen elektrischen Bremsen angeschlossen ist. Der Universalmotor 1 weist einen Anker 3 mit zwei Kollektoranschlüssen 4, 5 sowie eine Feldwicklung 6 mit Anschlüssen 7 und 8 auf. Die veranschaulichte Feldwicklung 6 kann entweder die gesamte Feldwicklung des Universalmotors 1 sein oder nur ein Teil, und zwar derjenige Teil, der bei der Umschaltung vom Motor in den Generatorbetrieb verwendet wird. Wie sich aus der nachfolgenden Beschreibung weiter unten ergibt, ist es beim Bremsen sowohl möglich, die gesamte Feldwicklung als auch nur einen Teil davon zu verwenden. Solche Motoren dienen dem Antrieb von handgeführten Elektrowerkzeugen.

Im Motorbetrieb bezieht der Universalmotor 1 seinen Strom über zwei Netzanschlußklemmen 11 sowie einen zweipoligen Umschalter 12, der zwei Ruhekontakte 13 und 14, zwei Arbeitskontakte 15 und 16 sowie zwei bewegliche Kontakte 17 und 18 aufweist.

Die Netzanschlußklemme 9 ist über eine Leitung 19 mit dem Anschluß 5 des Ankers 3 verbunden. Von dem Anschluß 4 führt eine Leitung 21 zu dem Arbeitskontakt 15 und es ist der bewegliche Kontakt 17 über eine Leitung 22 an den Anschluß 8 der Feldwicklung 6 angeschlossen. Der andere Anschluß 7 der Feldwicklung 6 liegt mit Hilfe einer Leitung 23 an dem beweglichen Kontakt 18 des Umschalters 12, dessen Arbeitskontakt 16 schließlich über eine Leitung 24 mit der anderen Netzanschlußklemme 11 verbunden ist.

Wenn der zweipolige Umschalter 12 aus der in Fig. 1 gezeigten Ruhestellung in die Arbeitsstellung überführt wird, werden die beiden Netzanschlußklemmen 9 und 11 elektrisch mit dem als Hauptschlußmotor geschalteten Universalmotor 1 verbunden, um diesen in Gang zu setzen.

In der gezeigten Ruhestellung dagegen ist die Bremsschaltung 2 mit dem Universalmotor 1 verbunden. Die Bremsschaltung 2 enthält eine Speicherschaltung 25, um nach dem Abschalten des Motorbetriebs dafür zu sorgen, daß eine Selbsterregung mit der richtigen Polarität entsteht, selbst dann, wenn der Restmagnetismus in der Feldwicklung 6 für eine Selbsterregung nicht mehr ausreichen sollte oder eine falsche Polarität hat. Die Speicherschaltung enthält als Speicherelement einen Speicherkondensator 26, der einenends unmittelbar mit dem Anschluß 5 des Ankers 3 verbunden ist und der andernends mit dem Ruhekontakt 13 in Verbindung steht. Parallel zu dem Kondensator 26 liegt eine Diode 28, die in später noch beschriebener Weise nach der Einleitung der Selbsterregung den Strom übernimmt.

Um den Speicherkondensator 26 aufzuladen, ist eine Diode 29 vorhanden, deren Anode an der Leitung 23 liegt und deren Kathode über einen Strombegrenzungswiderstand 31 mit der Verbindungsstelle zwischen dem Speicherkondensator 26 und dem Ruhekontakt 13 in Verbindung steht.

Die kinetische Energie des Ankers 3 wird beim elektrischen Bremsen von einem Bremswiderstand 32 in Wärme umgesetzt. Dieser Bremswiderstand 32 ist einenends unmittelbar mit dem Ruhekontakt 14 verbunden und anderenends an einer Leitung 34 angeschaltet, die zu dem Arbeitskontakt 15 führt; sie stellt für den Bremsbetrieb das Bezugspotential dar. Parallel zu dem Bremswiderstand 32 liegt die Serienschaltung aus einem selbstsperrenden Mosfet 35 sowie einem als Stromfühler dienenden Widerstand 36. Dabei führt die Drain-Elektrode des Mosfet 35 zu dem Ruhekontakt 14 und die Source-Elektrode zu dem Widerstand 36, wobei die Verbindungsstelle ein mit 38 bezeichneter Schaltungsknoten ist.

Der Mosfet 35 dient als Stellglied zur Regelung des Bremsstromes und wird mittels einer Steuerschaltung 41 alternierend ein- und ausgeschaltet. Die Steuerschaltung 41 weist einen Ausgang 42 auf, der mit der Gate-Elektrode des Mosfet 35 verbunden ist. Ferner hat die Steuerschaltung 41 einen Eingang 43, der über eine Leitung 44 an dem Knoten 38 angeschaltet ist. Das Bezugspotential auf der Leitung 34 gelangt zu einem Anschluß 45 und schließlich ist ein Rückkopplungseingang 46 vorhanden, der über eine Leitung 47 an dem Ruhekontakt 14 liegt.

Die Wirkungsweise der insoweit beschriebenen Anordnung ist wie folgt: Wenn der Universalmotor 1 in Betrieb gesetzt werden soll, um an seiner Ankerwelle mechanische Nutzleistung abzugeben, wird der zweipolige Umschalter 12 aus der in Fig. 1 gezeigten Ruhestellung in die Arbeitsstellung überführt, in der der Arbeitskontakt 15 mit dem beweglichen Kontakt 17 und der Arbeitskontakt 16 mit dem beweglichen Kontakt 18 in Verbindung steht. In dieser Stellung des zweipoligen Umschalters 12 fließt der an den Netzeingangsklemmen 9 und 11 eingespeiste Wechselstrom über die Leitung 24, den zweipoligen Umschalter 12, die Leitung 23 zu der Feldwicklung 6 und von dort wiederum über den zweipoligen Umschalter 12 zu dem Anker 3 über die Leitung 21. Dabei ist im Motorbetrieb der Anschluß 8 der Feldwicklung 6 mit dem Anschluß 4 des Ankers 3 verbunden. Von dem Anker 3 fließt schließlich der Strom über die Leitung 19 zu der Netzanschlußklemme 9 zurück.

Gleichzeitig wird während des Motorbetriebs bei der entsprechenden Halbwelle der an den Netzeingangsklemmen 9 und 11 liegenden Netzspannung über die Diode 29 und den Vorwiderstand 31 der Kondensator 26 aufgeladen, da die Serienschaltung aus den erwähnten Bauelementen zu dem Motor elektrisch parallelgeschaltet ist. Bei der gezeigten Polarität der Diode 29 erfolgt die Ladung in der Weise, daß die an dem Anschluß 5 des Ankers 3 liegende Elektrode des Kondensators 26 negativ gegenüber jener Elektrode aufgeladen wird, die mit dem Widerstand 31 in Verbindung steht.

Wenn nun der Motorbetrieb durch Umschalten des zweipoligen Umschalters 12 in die in Fig. 1 gezeigte Ruhestellung beendet wird, wird zunächst einmal die Stromversorgung aus den Netzanschlußklemmen 9 und 11 unterbrochen. Gleichzeitig wird eine Serienschaltung hergestellt, die den Anker 3, die Feldwicklung 6 sowie den Bremswiderstand 32 enthält, wobei die Polarität, mit der die Feldwicklung 6 mit dem Anker in Verbindung steht, gewechselt wird. Während im Motorbetrieb der Anschluß 4 des Ankers 3 mit dem Anschluß 8 der Feldwicklung 6 unmittelbar verbunden war, ist im Bremsbetrieb der Anschluß 5 des Ankers 3 über die Diode 28 sowie die Leitung 22 mit dem Anschluß 8 der Feldwicklung 6 verknüpft. Zu der Diode 28 liegt der Speicherkondensator 26 parallel und der Speicherkondensator 26 kann sich entladen, wobei der Entladestrom über den geschlossenen Schalterkontakt 13, 17 sowie die Leitung 22 zu der Feldwicklung 6 fließt. Von der Feldwicklung 6 fließt der Entladestrom über die Leitung 23 zu dem geschlossenen Schalterkontakt 14, 18 und von dort zu dem Bremswiderstand 32. Aus dem Bremswiderstand 32 fließt der Strom sodann über die Leitung 34, die Leitung 21 zu dem Anker 3, der mit seinem Anschluß 5 mit dem Speicherkondensator 26 in Verbindung steht. Außerdem gelangt die an der Leitung 23 anstehende Spannung gegenüber dem Bezugspotential auf der Leitung 34 in die Steuerschaltung 41, die umgehend den Mosfet 35 in den leitenden Zustand steuert, weil der Strom, der in dem Bremskreis fließt, an dem Widerstand 36 einen Spannungsabfall erzeugt, der unterhalb des Schwellwertes liegt, der für ein Abschalten des Transistors 35 sorgt.

Da der Kondensator 26 jedes Mal im Motorbetrieb über die Diode 29 mit derselben Polarität aufgeladen wird, fließt auch der Entladestrom durch die Feldwicklung 6 jedes Mal im Bremsbetrieb in derselben Richtung, d.h. der Universalmotor 1 wird jedes Mal beim Abschalten des Motorbetriebs und dem Umschalten in den Generatorbetrieb mit derselben Polarität erregt.

Infolge des durch die Feldwicklung 6 fließenden Stroms erzeugt der Anker 3 eine Generatorspannung, die in der angeschlossenen Schaltung zu einem Strom führt, der dieselbe Richtung hat wie der Entladestrom des Kondensators 26. Der von der Anker-EMK hervorgerufene Strom fließt zusätzlich über die Diode 28, aber ansonsten auf demselben Weg wie der vorher erwähnte Entladestrom des Kondensators 26. Der niederohmig geschaltete Transistor 35 sorgt für die Selbsterregung des als Hauptschlußgenerator geschalteten Universalmotors 1.

Der in dem Kreis fließende Erregerstrom, der gleichzeitig auch der Bremsstrom ist, erzeugt an dem Widerstand 36 einen Spannungsabfall, der als Steuerspannung gegenüber dem Bezugspotential auf der Leitung 34 in den Eingang 43 eingespeist wird.

Wegen des geringen Kreiswiderstandes steigt der Erregerstrom zunehmend an, bis der Spannungsabfall an dem Widerstand 36 einen vorgegebenen Grenzwert erreicht. Diese nun erreichte Spannung an dem Widerstand 36 veranlaßt die Steuerschaltung 41, an ihrem Ausgang 42 ein Signal abzugeben, das den Transistor 35 sperrt. Dadurch fällt die Spannung an dem Widerstand 36 weg. Über den Rückkopplungseingang 46 bleibt die Steuerschaltung 41 jedoch in dem vorerwähnten Schaltzustand, bis die dort anstehende Spannung unter einen anderen vorgegebenen Grenzwert gefallen ist. Der Grenzwert dieser Spannung entspricht beim Wiedereinschalten des Transistors 35 einem Strom durch den Widerstand 36 kleiner jenem Strom, der vorher einen Spannungsabfall an dem Widerstand 36 erzeugt hat, der die Steuerschaltung 41 zum Abschalten des Transistors 35 veranlaßte.

Beim Abschalten des Transistors 35 erfolgt eine Übernahme des aus der Leitung 23 fließenden Stromes auf den Bremswiderstand 32. Allerdings tritt bei der Kommutierung des Stroms auf den Bremswiderstand 32 keine Amplitudenänderung ein, denn die Induktivitäten des Ankers 3 und der Feldwicklung 6 erzeugen beim Abschalten des Transistors 35 eine Induktionsspannung, die letztlich zum Aufrechterhalten des Bremsstromes durch den Widerstand 32 führt, und zwar bei einer entsprechend erhöhten Spannung zwischen der Leitung 34 und der Leitung 23. Diese nach dem Umschalten höhere Spannung wird in der Steuerschaltung 41 einerseits dazu ausgenutzt, um zunächst den Sperrzustand des Transistors 35 aufrechtzuerhalten und andererseits zu erkennen, wann der Erregerstrom so weit abgesunken ist, daß ein erneutes Anfachen bzw. Hochsetzen des Erregerstromes durch Einschalten des Transistors 35 angezeigt ist.

Bei der beschriebenen Schaltungsanordnung wechseln ständig zwei Betriebszustände einander ab, wobei in dem einen Betriebszustand der Erreger- oder Bremsstrom durch den Transistor 35 fließt, womit Bremsleistung nur in den ohmschen Widerständen des Ankers 3,der Feldwicklung 6, dem Kollektor und anderen ohmschen Verbrauchern umgesetzt wird, und einem Betriebszustand, in dem der Transistor 35 gesperrt ist, so daß der Brems- oder Erregerstrom über den Bremswiderstand 32 fließt. In diesem Betriebszustand ist der Kreiswiderstand deutlich größer und es wird in dem Bremswiderstand 32 zusätzlich elektrische Energie in Wärme umgesetzt.

Durch entsprechende Veränderung des Erregerstroms kann dafür gesorgt werden, daß mit sinkender Drehzahl die Spannung, die von dem Anker 3 abgegeben wird, weniger schnell sinkt als drehzahlproportional. Dies wird erreicht, indem mit sinkender Drehzahl der Erregerstrom erhöht wird. Diese Erregerstromerhöhung wird erreicht, indem beispielsweise der Mittelwert der an dem Bremswiderstand 32 abfallenden Spannung gemessen und vorzeichenrichtig zu der an dem Stromfühlerwiderstand 36 abfallenden Spannung hinzuaddiert wird. Dadurch wird die Bremsleistung nach Bremsbeginn vermindert, verglichen mit einer Schaltungsanordnung, bei der die Ankerspannung drehzahlproportional sinkt, während bei mittleren und niedrigen Drehzahlen die Bremsleistung vergrößert wird, wiederum verglichen mit Schaltungsanordnungen, bei denen infolge eines konstanten Erregerstroms die Ankerspannung drehzahlproportional sinkt.

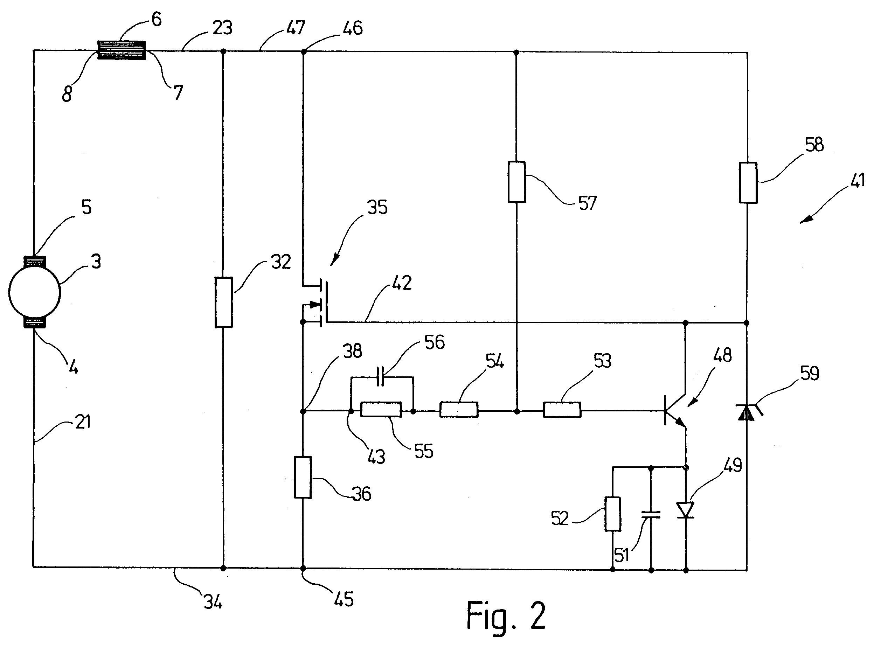

Einen möglichen Aufbau der Steuerschaltung 41 nach Fig. 1 zeigt Fig. 2, wobei hinsichtlich des Universalmotors 1 eine Vereinfachung vorgenommen ist, insofern, als der Zustand im Bremsbetrieb gezeigt ist und die Bauelemente, die zum Einleiten der Selbsterregung und zum Umpolen der Feldwicklung erforderlich sind, aus Vereinfachungsgründen weggelassen sind. Im übrigen sind für die Bauelemente, die aus Fig. 1 wiederkehren, dieselben Bezugszeichen verwendet.

Die Steuerschaltung 41 enthält einen bipolaren Steuertransistor 48, dessen Emitter über eine in Durchlaßrichtung geschaltete Diode 49 mit dem das Bezugspotential führenden Anschluß 45 verbunden ist. Parallel zu der Diode 49 liegt ein Kondensator 51 sowie ein Widerstand 52; der Zweck dieser Bauelemente ergibt sich, ebenso wie ihre Dimensionierung, aus der weiter unten gegebenen Funktionsbeschreibung.

Die Basis des bipolaren npn-Transistors 48 ist über die Serienschaltung dreier Widerstände 53, 54 und 55 an den Eingang 43 der Steuerschaltung angeschlossen. Der Widerstand 55 ist durch einen Kondensator 56 überbrückt.

Der Kollektor des Transistors 48 liegt schließlich an dem Ausgang 42 und somit an dem Gate des selbstsperrenden Mosfet 35. Ein weiterer Widerstand 57 verbindet den Rückkopplungseingang 46 mit der Verknüpfungsstelle zwischen den beiden Widerständen 53 und 54.

Schließlich liegt zwischen dem Rückkopplungseingang 46 und dem Anschluß 45 eine Serienschaltung aus einem Widerstand 58 und einer Z-Diode 59. Die Z-Diode 59 ist anodenseitig mit dem Anschluß 45 verbunden und kathodenseitig an den Ausgang 42 angeschlossen.

Zur Erläuterung der Funktionsweise sei unterstellt, daß die Selbsterregung bereits begonnen hat einzusetzen, wie dies im Zusammenhang mit Fig. 1 erläutert ist. Unmittelbar nach dem Anfachen der Selbsterregung bzw. beim Anfachen ist zunächst einmal der Transistor 35 gesperrt. Da aber sofort der Kondensator 26 zwischen den Leitungen 47 und 34 eine Spannung entstehen läßt, die größer ist, als die Spannung, die notwendig ist, um den selbstsperrenden Mosfet 35 in den leitenden Zustand zu steuern, gelangt über den Widerstand 58 auf das Gate des Mosfet 35 eine Spannung, die ihn durchsteuert. Der obere Wert dieser den Mosfet 35 einschaltenden Spannung wird durch die Z-Diode 59 auf deren Nennwert gegenüber dem Bezugspotential auf der Leitung 34 festgeklemmt. Damit ist umgehend, wie im Zusammenhang mit Fig. 1 erwähnt, der Transistor 35 leitend und der Erregerstrom kann sich aufbauen. Er fließt zusätzlich über den Widerstand 36 und ruft eine proportional steigende Spannung hervor, die ständig über die Widerstandskette 53, 54, 55 von dem Transistor 48 gemessen wird. Infolge des durchgesteuerten Transistors 35 liegt an dem Rückkopplungseingang 46 eine Spannung an, die nicht ausreicht, um über den Widerstand 57 den Transistor 48 aufzusteuern; andererseits ist aber die Spannung an dem Eingang 46 hoch genug, damit sich der Mosfet 35 über den Widerstand 58 selbsttätig aufgesteuert hält.

Die Spannung an dem Rückkopplungseingang 46 gegenüber dem Bezugspotential auf der Leitung 34 wird über die Serienschaltung aus den Widerständen 57, 54, 55 und 36 heruntergeteilt, wobei der durch den Widerstand 36 fließende Erregerstrom eine entsprechende Potentialverschiebung hervorruft. Es kann deswegen davon ausgegangen werden, daß die Steuerung des Steuertransistors 48 in dieser Betriebsphase im wesentlichen nur von dem Spannungsabfall an dem Widerstand 36 abhängig ist, da der hierüber fließende Erregerstrom deutlich größer ist als der Strom, den der Widerstand 57 zuläßt.

Gleichzeitig lädt sich jedoch über den Widerstand 57 der Kondensator 56 auf eine Spannung entsprechend dem Spannungsabfall an dem Widerstand 55 auf. Der Spannungsabfall an diesem Widerstand 55 ist wiederum davon abhängig, wie hoch die Spannung an dem Rückkopplungseingang 46 und damit an dem Bremswiderstand 32 ist.

Sobald der Bremsstrom durch den Widerstand 36 so weit angestiegen ist, daß er den Transistor 48 aufzusteuern vermag, wird das Potential an dem Ausgang 42 von dem nunmehr durchgesteuerten Transistor 48 auf das Potential der Leitung 34 gezogen. Die Folge ist ein umgehendes Abschalten des Transistors 35. Das Abschalten des Transistors 35 hat in den Induktivitäten des Ankers 3 und der Feldwicklung 6 einen Spannungsanstieg zur Folge. Dieser Spannungsanstieg ist so groß, daß anschließend durch den Widerstand 32 derselbe Strom fließt wie unmittelbar vorher durch den Widerstand 36 und den vorher durchgeschalteten Mosfet 35. Durch das Abschalten des Mosfet 35 kommutiert der Erregerstrom durch die Feldwicklung 6 auf den Bremswiderstand 32, ohne daß eine Stromänderung eintritt. Allerdings ist die Folge dieser Stromübernahme auf den Bremswiderstand 32 ein kräftiger Spannungsanstieg auf der Leitung 47, die in den Rückkopplungseingang 46 gelangt. Die Spannung an dem Eingang 46 reicht nun völlig aus, um an der Serienschaltung aus den Widerständen 36, 54 und 55, die zusammen mit dem Widerstand 57 einen Spannungsteiler bilden, eine Spannung zu erzeugen, die ausreicht, um den Transistor 48 im aufgesteuerten Zustand zu halten, obwohl wegen des Abschaltens des Transistors 35 an dem Widerstand 36 kein Spannungsabfall mehr auftritt.

Der Universalmotor 1 wird nun entsprechend der in dem Widerstand 32 umgesetzten elektrischen Leistung abgebremst. Gleichzeitig sinkt die Induktionsspannung von Anker und Feld und damit die Spannung an dem Rückkopplungseingang 46.

Nach einer entsprechenden Zeit ist die Induktionsspannung unter einen Wert gefallen, der in der Lage ist, den Transistor 48 durchgesteuert zu halten. Der Transistor 48 geht sodann wieder in den Sperrzustand über, d.h. die Spannung an dem Ausgang 42 springt wiederum auf eine von der Z-Diode 59 festgelegte Spannung gegenüber dem Bezugspotential auf der Leitung 34. Die Folge hiervon ist ein Durchsteuern des Transistors 35, wodurch ein erneutes Hochlaufen des Erregerstroms möglich wird, bis der Spannungsabfall an dem Widerstand 36 erneut die Schaltschwelle erreicht.

Die Parallelschaltung aus dem Kondensator 56 und dem Widerstand 55 arbeitet zusammen mit dem Widerstand 57 als Tiefpaßfilter, so daß an der Parallelschaltung, aufgefaßt als Zweipol, eine Spannung abfällt, die dem Mittelwert der an dem Widerstand 32 abfallenden, getakteten Spannung entspricht. Diese Mittelwertsbildung geschieht deswegen, weil ständig der Kondensator 56 über den Widerstand 57 aus dem Rückkopplungseingang 46 nachgeladen wird, und zwar im wesentlichen immer dann, wenn der Mosfet 35 abgeschaltet ist. Im eingeschalteten Zustand des Mosfet 35 ist die Spannung an dem Bremswiderstand 32 nur sehr klein, nämlich gleich der Summe aus dem Spannungsabfall an dem Mosfet 35 zuzüglich der Schwellenspannung der Steuerschaltung 41, also dem Spannungsabfall an dem Widerstand 36. Für den Zeitraum der Durchsteuerung des Mosfet 35 kann näherungsweise angenommen werden, daß der Spannungsabfall an dem Bremswiderstand 32 null ist. Somit ist in der Tat die an dem Tiefpaß aus den Widerständen 55, 57 und dem Kondensator 56 abfallende Spannung ein proportionales Abbild der mittleren Spannung an dem Bremswiderstand 32.

Die auf diese Weise erhaltene Korrekturspannung wird zu dem Spannungsabfall an dem Widerstand 36 hinzuaddiert und führt dazu, daß, bezogen auf den Verlauf der Bremsung, zunehmend höhere Ströme durch den Widerstand 36 und damit durch die Feldwicklung 6 erforderlich sind, ehe es zum Abschalten des Mosfet 35 kommt. Zu Beginn der Bremsung ist die Spannung an dem Bremswiderstand 32 wegen der hohen Ankerdrehzahl 3 bei gegebenem Erregerstrom hoch, d.h. die an dem Kondensator 56 und dem Widerstand 55 abfallende Spannung ist entsprechend groß, so daß, um die Schaltschwelle des Transistors 48 zu erreichen, kleinere Ströme durch den Widerstand 36 und damit kleinere Erregerströme erforderlich sind, um den Mosfet 35 abzuschalten als zu später liegenden Zeitpunkten. Bei später liegenden Zeitpunkten der Bremsung ist die Ankerdrehzahl gesunken und der Anker 3 gibt eine geringere Ankerspannung ab. Zu der Spannung, die von dem als Stromfühler dienenden Widerstand 36 abgegeben wird, wird eine entsprechend kleinere, mit Hilfe des Kondensators 56 gemittelte Spannung hinzuaddiert. Da die Schaltschwelle für den Transistor 48 aber im wesentlichen unverändert ist, muß zum Abschalten des Mosfet 35 der Strom stärker angestiegen sein als zu Beginn der Bremsung, also Zeitpunkten, die früher liegen.

Infolge des gegen Schluß der Bremsung erhöhten Erregerstroms sinkt die Ankerspannung mit der Drehzahl weniger stark als es der Fall wäre, wenn wegen Weglassung des Kondensators 56 der Erregerstrom konstant eingeregelt wäre. Wegen des bei der neuen Schaltung gegen Ende der Bremsung ansteigenden Brems- bzw. Erregerstroms wird der Bremswiderstand 32, bezogen auf den Bremsverlauf, gleichmäßiger belastet, d.h. zu Beginn der Bremsung tritt eine Verlustleistung auf, die, verglichen mit einer Anordnung, bei der die Anker-EMK drehzahlproportional sinkt, kleiner ist, während gegen Ende der Bremsung, verglichen mit der Schaltung mit drehzahlproportionaler Ankerspannung, bei der neuen Schaltung eine erhöhte Ankerspannung aufrechterhalten wird, so daß die Verluste an der Verzögerung, die zu Beginn eintreten, durch die bessere Verzögerung gegen Ende der Bremsung wieder wettgemacht werden.

Bei bestimmten Motortypen, die sich schlecht selbst erregen, kann es geschehen, daß die Spannung an dem Anker infolge der Bremsung bei Bremsbeginn nicht weit genug hoch läuft, um die gewünschte Signalspannung an dem Rückkopplungseingang 46 zu erzeugen. Solche Motoren würden im Bremsbetrieb ein starkes Kollektorfeuer zeigen und deswegen die Schaltung irritieren. Um diese Einflüsse zu vermeiden, ist die Diode 49 vorgesehen, die unmittelbar nach Einleiten der Bremsung durch den Kondensator 51 überbrückt ist. Dadurch ist die Schaltschwelle zum Abschalten des Mosfet 35 gleich 0,6 V, nämlich der Durchlaßspannung der Basis-Emitter-Strecke des Transistors 48. Erst in dem Maße, in dem sich der zu der Diode 49 parallelgeschaltete Kondensator 51 auflädt, verlagert sich die Schaltschwelle in Richtung auf den Endwert, der bei der gezeigten Ausführungsform bei 1,2 V liegt, nämlich zwei Mal der Flußspannung der beiden Sperrschichtübergänge an der Basis-Emitter-Strecke des Transistors 48 und der Diode 49. Unmittelbar nach Einleitung der Bremsung wird bei der gezeigten Schaltungsanordnung mit der Diode 49 zunächst einmal ein kleinerer Erregerstrom 6 fließen und damit die Ankerbelastung vermindert sein, ehe im späteren Verlauf durch zunehmenden Wegfall des Kurzschlusses für die Diode 49 auf den endgültigen stationären Betrieb eingeregelt wird. Ohne die Diode 49 und den Kondensator 51 würde sonst ein zu hoher Erregerstrom erforderlich sein und die Belastung des Motors 1 zu hoch sein. Die Zeitkonstante ist kurz gegenüber der Bremszeit.

Der Widerstand 52 hat lediglich die Funktion, am Ende der Bremsung den Kondensator 51 wieder zu entladen, damit der beschriebene Zyklus erneut starten kann.

Ersichtlicherweise wird durch die Steuerschaltung 41 beim ersten Einleiten der Selbsterregung umgehend der Transistor 35 durchgesteuert, um möglichst schnell den Nennwert des Erreger- bzw. Bremsstromes zu erzeugen. Sobald der Bremsstrom eine vorgegebene obere Schranke erreicht hat, wird jeweils der Transistor 35 gesperrt und der Bremsstrom kommutiert auf den Bremswiderstand 32. Die Spannung an dem Bremswiderstand 32 schwankt zeitlich gesehen zwischen dem Wert nahe null und einem Momentanwert, abhängig von der Bremsung, hin und her. Dieser schwankende Wert wird von dem Tiefpaß aus dem Kondensator 56 und den Widerständen 55, 57 gemittelt und zur Veränderung der Schaltcharakteristik zu der Spannung an dem Widerstand 36 hinzuaddiert.

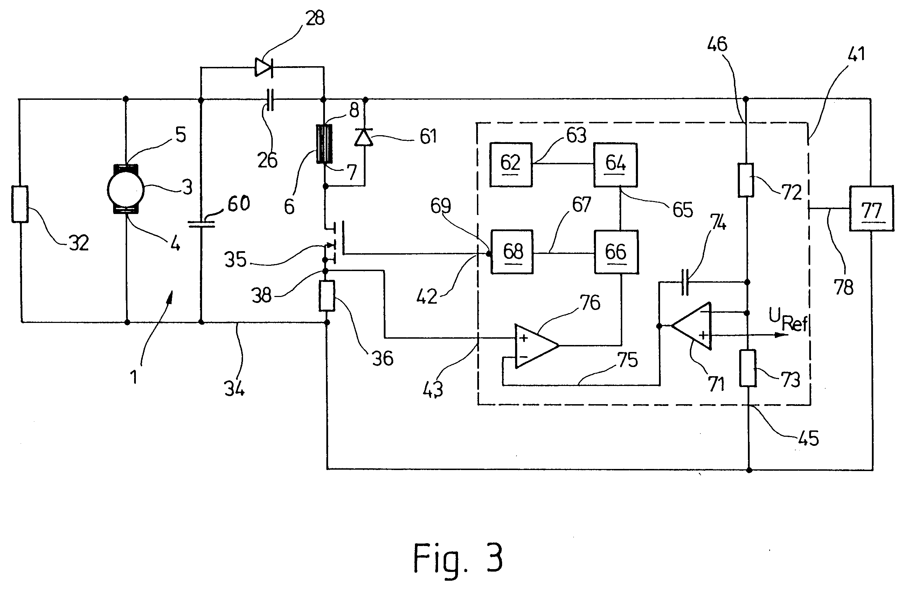

Eine weitere Möglichkeit, um die an dem Bremswiderstand 32 umgesetzte elektrische Leistung über den Bremsverlauf zu vergleichmäßigen, zeigt Fig. 3. In dieser Figur sind lediglich diejenigen Bauelemente gezeigt, die nach dem Umschalten in den Bremsbetrieb und nach Einleitung der Selbsterregung erforderlich sind. Diejenigen Bauelemente, die für den Motorbetrieb benötigt werden und die dazu dienen, die Selbsterregung einzuleiten, sehen ähnlich aus wie dies in Fig. 1 gezeigt ist und sind der Übersichtlichkeit halber aus Fig. 3 teilweise weggelassen.

Bei der Schaltungsanordnung nach Fig. 3 wird der Erregerstrom derart geregelt, daß die von dem Anker 2 abgegebene Spannung im wesentlichen konstant gehalten wird. Als eine zwangsläufige Folge davon wird auch die Verlustleistung an dem Bremswiderstand 32 und damit die Bremsleistung im wesentlichen konstant gehalten, wenn man einmal von der Verschiebung der Verlustleistungsbilanz absieht, die dadurch eintritt, daß mit sinkender Drehzahl sich die Verluste vergrößern, die im Erregerkreis entstehen sowie der sich ändernden Induktionsspannung an der Feldwicklung 3 bzw. dem Anker 2 und die der Signalspannung an dem Rückkopplungseingang 46 überlagert sind.

Der wesentliche Unterschied hinsichtlich der Beschaltung des Motors 1 im Bremsbetrieb besteht darin, daß der Bremswiderstand 32 gemeinsam mit einem Glättungskondensator 60 zu dem Anker 3 parallelliegt und die Feldwicklung 6 mit Hilfe einer Freilaufdiode 61 im Bremsbetrieb überbrückt ist. Damit entsteht nach Ausschalten des Mosfet 35 ein Freilaufkreis, der in der Feldwicklung 6 den Feldstrom aufrecht erhält.

Die zum Einleiten der Selbsterregung notwendige Anordnung aus dem Startkondensator 26 und der parallelgeschalteten Kommutierungsdiode 28 liegt, wie vorher, in der Verbindungsleitung zwischen dem Anker 3 und der Feldwicklung 6.

Während im vorhergehenden Beispiel die Steuerschaltung 41 im wesentlichen die Charakteristik eines Schmitt-Triggers aufgewiesen hat, arbeitet die Steuerschaltung 41 bei der Ausführungsform nach Fig. 3 als im Tastverhältnis steuerbarer Oszillator.

Die Steuerschaltung 41 enthält einen mit einer festen Arbeitsfrequenz schwingenden Oszillator 62, der an seinem Ausgang 63 ein Rechtecksignal abgibt. Das Rechtecksignal gelangt von dem Ausgang 63 in einen Differenzierer 64, der mit seinem Ausgang 65 an ein Flipflop 66 mit einem invertierenden Setzeingang $\overline{S}$, einem invertierenden Rücksetzeingang $\overline{R}$ und einem invertierenden Ausgang $\overline{Q}$ angeschlossen ist, und zwar liegt der Ausgang 65 an dem invertierenden Setzeingang $\overline{S}$. Der Differenzierer macht aus dem vom Oszillator 62 abgegebenen Rechtecksignal Nadelimpulse mit festem zeitlichen Abstand.

Von dem invertierenden Ausgang $\overline{Q}$ des Flipflops 66 führt eine Leitung 67 zu einem Eingang eines invertierenden Treibers 68. Sein Ausgang 69 ist der Ausgang 42 der Steuerschaltung 41. Der Treiber 68 hat lediglich die Aufgabe, genügend Strom zu liefern, um den Feldeffekttransistor 32 schnell zwischen seinen beiden Schaltzuständen hin- und herschalten zu können.

Die Steuerschaltung 41 enthält ferner einen Differenzverstärker 71, dessen invertierender Eingang an einen Spannungsteiler aus zwei Widerständen 72 und 73 liegt. Die Widerstände 72 und 73 sind in Serie zwischen die beiden Stromversorgungseingänge 45 und 46 geschaltet und teilen die dort anstehende Spannung auf eine geeignete proportionale Spannung herunter, die in den invertierenden Eingang des Komparators 71 gelangt. Der nicht invertierende Eingang des Differenzverstärkers 71 ist mit einer festen Referenzspannung $U_{ref}$ beaufschlagt. Außerdem ist der invertierende Eingang des Differenzverstärkers 71 mittels eines Kondensators 74 gegen den Ausgang kapazitiv rückgekoppelt, so daß ein vergleichender Integrator entsteht.

Von dem Ausgang des Integrators 71 führt eine Verbindung 75 zu einem invertierenden Eingang eines Komparators 76, dessen Ausgang an den invertierenden Rücksetzeingang $\overline{R}$ des Flipflops 66 angeschaltet ist.

Der nicht invertierende Eingang des Komparators 76 ist mit dem Eingang 43 der Steuerschaltung 41 verbunden und bekommt als Signalspannung den Spannungsabfall an dem wiederum als Stromfühler dienenden Widerstand 36.

Zur Stromversorgung der Steuerschaltung 41 ist eine Spannungsstabilisierung 77 vorgesehen, die zu den Stromversorgungseingängen 45 und 46 parallelgeschaltet ist und über einen Anschluß 78 eine stabilisierte Versorgungsspannung gegenüber der Leitung 34 in die aktiven Bauelemente der Steuerschaltung 41 einspeist.

Die Funktionsweise der Schaltung nach Fig. 3, die lediglich den Bremsbetrieb zeigt, ist wie folgt: Unmittelbar nach dem Umschalten in den Bremsbetrieb entsteht die Parallelschaltung aus dem Anker 3 und dem Bremswiderstand 32. Die Feldwicklung 6 ist über den Kondensator 26 bzw. die Diode 28 und den in Serie mit ihr geschalteten Transistor 35 sowie dem als Stromfühler dienenden Widerstand 36 ebenfalls zu dem Anker 3 parallelgeschaltet. Die Anordnung hat damit Nebenschlußcharakteristik.

Unmittelbar nach dem Umschalten in den Bremsbetrieb übernimmt der Kondensator 26 die Versorgung für die Spannungsstabilisierung 77 und damit die Steuerschaltung 41, die bereits im vorausgehenden Motorbetrieb ständig mitgelaufen ist, die aber keine Eingangssignale erhalten hat. Der Oszillator 62 liefert damit die notwendigen Impulse, um das Flipflop 66 in einen Zustand zu schalten, der den Treiber 68 veranlaßt, an seinem Ausgang 69 eine von null verschiedene Spannung in das Gate des Transistors 35 einzuspeisen, der demzufolge aufgesteuert wird. Somit ist unmittelbar nach dem Umschalten der Transistor 35 durchgesteuert und auch der Integrator 71 auf seinen unteren Wert. Der Startkondensator 26 kann sich unmittelbar über die Feldwicklung 6, den durchgeschalteten Mosfet 35, den Stromfühlerwiderstand 36 und den Anker 3 entladen, wodurch in der Feldwicklung 6 ein Erregerstrom entsteht.

Gleichzeitig beginnt der als Integrator geschaltete Differenzverstärker 71 die nun niedrigere Spannung an den Stromversorgungseingängen 45 und 46 mit der Referenzspannung $U_{ref}$ zu vergleichen und den Differenzwert zu integrieren. Der erhaltene integrierte Wert ist der Sollwert für den Komparator 76.

Sobald die an dem Widerstand 36 abfallende Spannung den von dem Integrator 71 gelieferten Sollwert übersteigt, wird das Flipflop 66 umgeschaltet, was zu einem Abschalten des Transistors 35 führt.

Somit ist bereits unmittelbar nach dem Einschalten des Bremsbetriebs der Transistor 35 durchgesteuert, um in der Feldwicklung 6 den Feldstrom zu erzeugen, der nach dem Abschalten des Transistors 35 als Freilaufstrom über die Diode 61 weiterfließt. Die an den Anschlüssen 45 und 46 anstehende Spannung ist nach dem Einleiten der Selbsterregung und dem Kommutieren des Stroms auf die Diode 28 gleich der von dem Anker 3 abgegebenen Spannung. Durch den oben erwähnten Vergleich dieser Spannung mit dem Referenzwert $U_{ref}$ und der nachfolgenden Integration dieses Differenzwertes wird für den Komparator 76 solange der Sollwert verstellt, bis die durch die Spannungsteilerwiderstände 72, 73 heruntergeteilte Spannung zwischen den Stromversorgungsanschlüssen 45 und 46 gleich dem Referenzwert $U_{ref}$ ist. Da der Erregerstrom in der Feldwicklung 6 und die von dem Anker 3 bei konstanter Drehzahl abgegebene Spannung miteinander verknüpft sind, kann die Steuerschaltung 41 die Ankerspannung konstant halten, obwohl als Abschaltkriterium für den Transistor 35 der durch den Widerstand 36 fließende Strom verwendet wird.

Die Schaltung hat den Vorteil, daß die Welligkeit, die die Ankerspannung zwangsläufig zeigt, wegen der Integration keinen Einfluß auf die Steuerung hat.

Umgekehrt wird bei mit der Drehzahl an sich sinken wollender Ankerspannung die Differenz zwischen der heruntergeteilten Ankerspannung und der Referenzspannung $U_{ref}$ nach Integration durch den Kondensator 74 in einen veränderten größeren Sollwert für den Komparator 76 umgesetzt, derart, daß bei sinkender Drehzahl des Ankers 3 der Erregerstrom durch die Feldwicklung 6 erhöht wird, um die Ankerspannung möglichst konstant zu halten. Die zwangsläufige Folge hiervon ist ein Konstanthalten der Spannung an dem Bremswiderstand 32. Verglichen wiederum mit einer Anordnung , bei der die Ankerspannung drehzahlproportional sinkt, zeigt die beschriebene Schaltung eine Ankerspannung, die in einem Zeitintervall, beginnend mit dem Beginn der Bremsung, nahezu konstant ist. Der Bremswiderstand 32 wird bei der gezeigten Schaltung über ein entsprechend langes Intervall des Bremszyklus mit einer nahezu konstanten Leistung beaufschlagt. Leistungsspitzen zu Beginn der Bremsung, wie sie bei einer solchen Schaltung, jedoch ohne Anhebung des Erregerstroms zwangsläufig auftreten würden, sind bei der Schaltung nach Fig. 3 vermieden.

Zur Vervollständigung der Funktionsbeschreibung der Steuerschaltung 41 sei noch angegeben, daß jedes Mal, wenn der Spannungsabfall an dem Widerstand 36 den Sollwert auf der Leitung 75 übersteigt, das Flipflop 66 von dem Komparator 76 zurückgesetzt wird. Der nächste ankommende Nadelimpuls des mit fester Frequenz schwingenden Oszillators 62 hingegen schaltet das Flipflop zurück und in der Folge den Transistor 35 wieder ein. Dadurch entsteht nach außen gesehen der vorerwähnte Oszillator mit veränderlichem Tastverhältnis und konstanter Periodendauer. Die Einschaltzeit für den Transistor 35 ist dabei der primär veränderliche Term und wird von dem Signal an dem Widerstand 36 gesteuert.

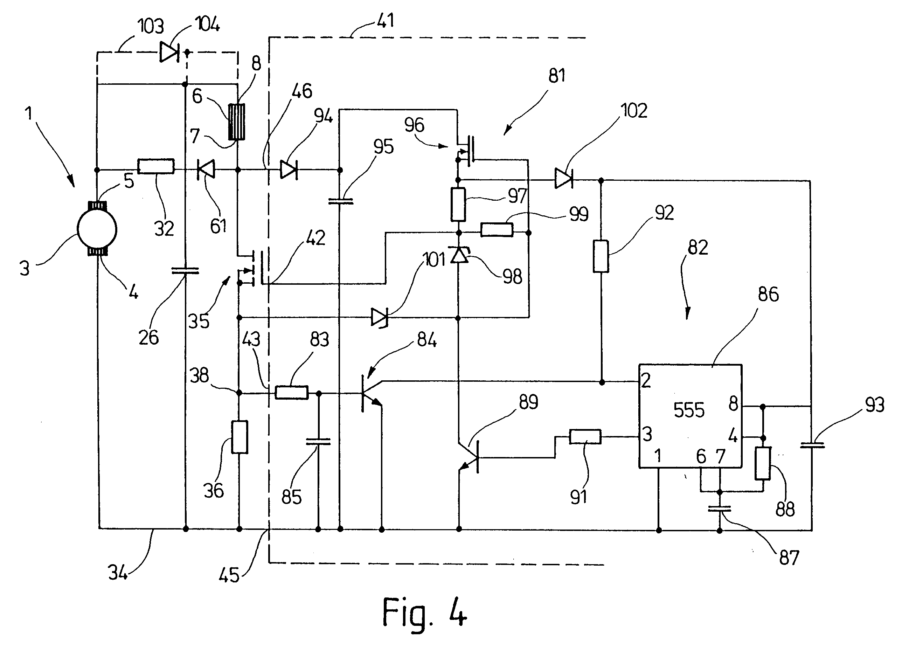

Während bei den vorher gezeigten Ausführungsbeispielen der Erregerstrom verstellt wird, um zu erreichen, daß die Leistung, die von dem Bremswiderstand in Wärme umgesetzt wird, zumindest in einem mit dem Bremsbeginn beginnenden Zeitintervall weniger stark als proportional zur Drehzahl fällt, zeigt die nachfolgende Fig. 4 eine Ausführungsform, bei der derselbe Zweck erreicht wird mit konstant gehaltenem Erregerstrom. Der wesentliche Unterschied der Ausführungsform nach Fig. 4 gegenüber den vorherigen Ausführungsbeispielen besteht dabei darin, daß der Bremswiderstand in dem Freilaufstromkreis der Feldwicklung 6 liegt. Der Bremswiderstand ist hierbei zweckmäßigerweise der Anlaßwiderstand, der beim Starten des Elektromotors vorgeschaltet wird und durch einen zusätzlichen Kontakt am Handschalter automatisch zeitverzögert überbrückt wird. Durch Anlassen des Elektromotors über den Anlaßwiderstand sollen Stromspitzen vermieden werden, die zum Auslösen der Sicherung führen können.

Wie die vorhergehende Fig. 3 zeigt auch Fig. 4 im wesentlichen nur die Bauelemente, die im Bremsbetrieb notwendig sind, während die Bauelemente zum Nachladen der Ladeschaltung mit dem Startkondensator und die Umschalteinrichtung aus Übersichtlichkeitsgründen weggelassen sind. Fig. 4 zeigt die elektrisch wirksamen Bauelemente für den Bremsbetrieb in der dann wirksamen Zusammenschaltung.

Soweit in Fig. 4 Bauelemente wiederkehren, die hinsichtlich ihrer Funktion mit den Bauelementen nach den vorhergehenden Figuren übereinstimmen, sind dieselben Bezugszeichen verwendet.

Wie erwähnt, ist im Falle der Ausführung nach Fig. 4 der Bremswiderstand 32 der Anlaßwiderstand, der bei den in Frage kommenden Maschinen Werte zwischen 2 und 10 Ohm haben kann. Es sind Maschinen bekannt, bei denen der Anlaßwiderstand 3,5 Ohm bzw. 5 Ohm beträgt. Er liegt damit um den Faktor 3 bis 10 über dem ohmschen Widerstand der Feldwicklung 6, zu der er über die Freilaufdiode 61 zur Feldwicklung 6 im Bremsbetrieb parallelgeschaltet ist.

Die Steuerschaltung 41 arbeitet auch bei Fig. 4 wiederum als Oszillator mit verstellbarem Tastverhältnis, wobei jedoch die Ausschaltzeit des Transistors 35 fest ist und sich die Periodendauer während des Bremsvorgangs ändert. Die Einschaltzeit des Transistors 35 steigt mit sinkender Drehzahl, womit die Schaltfrequenz mit sinkender Drehzahl ebenfalls abnimmt.

Die Steuerschaltung 41 enthält im wesentlichen eine gesteuerte Stromquelle 81 sowie ein Monoflop 82, durch das die Ausschaltzeit des Transistors 35 bestimmt wird.

Von dem Eingang 43, der an den Widerstand 36 angeschlossen ist, führt ein Schutz- oder Vorwiderstand 83 zu der Basis eines bipolaren Transistors 84, dessen Emitter mit dem Stromversorgungseingang 45 und damit mit dem Bezugspotential verbunden ist. Parallel zu der Basis-Emitter-Strecke des Transistors 84 liegt noch ein Siebkondensator 85, der zusammen mit dem Widerstand 83 einen Tiefpaß ergibt.

Kern des Monoflops 82 ist ein Fensterdiskriminator 86 in Gestalt einer integrierten Schaltung vom Typ 555, an dessen Pin 2 der Kollektor des Transistors 84 angeschlossen ist. Der Fensterdiskriminator 86 ist in bekannter Weise als Monoflop beschaltet, und zwar liegt sein Pin 1 auf dem Bezugspotential, Pin 6 und Pin 7 sind miteinander verbunden sowie über einen zeitbestimmenden Kondensator 87 an das Bezugspotential der Leitung 34 angeschaltet; außerdem besteht über einen zeitbestimmenden Widerstand 88 eine Verbindung zwischen Pin 4 und Pin 7, wobei Pin 4 mit Pin 8 galvanisch verbunden ist. Pin 3 bildet den Ausgang des Monoflops 82, an den ein bipolarer Transistor 89 mit seiner Basis über einen Widerstand 91 angeschlossen ist. Der Emitter des Transistors 89 liegt ebenfalls auf dem Bezugspotential. Schließlich ist Pin. 2 mit Pin 8, der den Stromversorgungseingang für den Fensterdiskriminator 86 darstellt, über einen pull-up-Widerstand 92 verbunden und zur Vermeidung von Störungen bzw. zur Erzeugung der Versorgungsspannung bei durchgeschaltetem Mosfet 35 ist Pin 8 über einen Kondensator 93 an dem Stromversorgungseingang 45 gepuffert.

Zwecks hinreichend gesiebter Stromversorgung enthält die Steuerschaltung 41 eine von dem Stromversorgungseingang 46 kommende Diode 94, über die ein mit dem Stromversorgungseingang 45 verbundener Siebkondensator 95 aufgeladen wird, und zwar auf die von dem Anker 3 abgegebene EMK zuzüglich der Induktionsspannung der Feldwicklung 6. An die Kathode der Diode 94 ist mit seiner Drainelektrode ein selbstleitender Feldeffekttransistor 96 angeschaltet, der den Kern der Stromquelle 81 bildet. Die Sourceelektrode des selbstleitenden Feldeffekttransistors 96 liegt über die Serienschaltung eines Widerstandes 97 sowie einer Z-Diode 98 an dem Kollektor des Transistors 89. Die Verbindungsstelle zwischen der Kathode der Z-Diode 98 und dem Widerstand 97 stellt den Ausgang 42 der Steuerschaltung 41 dar, an den das Gate des Transistors 35 angeschlossen ist.

Das Gate des Feldeffekttransistors 96 liegt einerseits über einen Widerstand 99 an der Verbindungsstelle zwischen dem Widerstand 97 und der Z-Diode 98 und andererseits unmittelbar an dem Kollektor des Transistors 89.

Eine weitere Z-Diode 101 verbindet schließlich den Kollektor des Transistors 89 mit der Sourceelektrode des Transistors 35; ihre Kathode ist an dem Kollektor des Transistors 89 angeschaltet.

Schließlich führt zur Stromversorgung des Monoflops 82 von der Sourceelektrode des Transistors 96 eine Diode 102 zu Pin 8 des Fensterdiskriminators 86.

Ohne daß das Schaltungsverhalten im Bremsbetrieb nach außen hin wesentlich verändert ist, kann die Diode 61 auch an der gezeigten Stelle entfallen und statt dessen, wie durch eine gestrichelte Linie 103 und die Diode 104 angedeutet, in der Verbindungsleitung zwischen dem Ankeranschluß 5 und dem Anschluß für den Kondensator 26 liegen. Der Bremswiderstand 32 würde dann sowohl im Freilaufkreis wirksam sein als auch bei durchgesteuertem Transistor 35.

Die beschriebene Schaltung arbeitet wie folgt: Unmittelbar nach dem Umschalten in den Bremsbetrieb nach beendetem Motorbetrieb entsteht die in Fig. 4 gezeigte Schaltung. Im vorausgehenden Motorbetrieb war der Startkondensator 26 auf die Scheitelspannung der Netzspannung aufgeladen. Er erzeugt nun über die Feldwicklung 6 bzw. den beim Bremsen wirksamen Teil der Feldwicklung 6 eine Versorgungsspannung für die Steuerschaltung 41, die aufgrund der Beschaltung umgehend den Transistor 35 durchsteuert. Damit entsteht ein weiterer Entladungsstrom durch den Transistor 35 und den Widerstand 36, womit eine Felderregung zustandekommt. Der gleichzeitig auch noch über den Anker 3 kurzfristig fließende Entladestrom ist unschädlich, da unmittelbar nach dem Erzeugen des Feldstroms der Anker 3 eine EMK abgibt, die einen weiteren Entladestrom des Kondensators 26 durch den Anker 3 verhindert. Somit wird umgehend die Felderregung erzeugt. Sobald der Strom in dem geschlossenen Bremskreis weit genug angestiegen ist, was mit Hilfe des als Stromfühler dienenden Widerstandes 36 ermittelt wird, wird das Monoflop 82 an seinem Eingang getriggert. Die Schaltschwelle ist die Basis-Emitter-Spannung des Transistors 84 und sie legt fest, bei welchem Strom durch den Widerstand 36 das Triggern erfolgt.

Über Pin 3 des Fensterdiskriminators 86 wird der Transistor 89 durchgesteuert, der daraufhin über seinen Kollektor und die damit in Serie liegende Z-Diode 98 das Gate des Transistors 35 in Richtung auf das Bezugspotential der Leitung 34 zieht. Der Transistor 35 wird gesperrt und es fließt fortan ein durch den kombinierten Brems-/Anlaßwiderstand 32 fließender Freilaufstrom in dem Freilaufstromkreis, der die Feldwicklung 6, die Diode 61 bzw. 104 und den besagten kombinierten Anlaß- und Bremswiderstand 32 enthält. Die Induktionsspannungen, die von der Induktivität des Ankers 3 beim Abschalten des Mosfet 35 herrühren, führen zu einem Aufladen des Kondensators 26.

Nachdem bei dem Monoflop 82 die Haltezeit abgelaufen ist, wird der Transistor 35 wieder eingeschaltet.

In der Pause, während der der Mosfet 35 gesperrt ist, klingt der in dem Freilaufstromkreis der Feldwicklung 6 fließende Erregerstrom infolge der Bedämpfung durch den Bremswiderstand 32 und den ohmschen Innenwiderstand der Feldwicklung 6 ab. Unmittelbar vor dem Wiedereinschalten des Mosfet 35 ist der Erregerstrom durch die Feldwicklung 6 deswegen kleiner als der Strom, der vorher zum Abschalten des Mosfet 35 geführt hat.

Mit dem Einschalten des Mosfet 35 kommutiert der durch die Feldwicklung 6 fließende Strom von der Freilaufdiode 61 auf den Mosfet 35 und die von dem Anker 3 erzeugte Spannung sowie die in dem Kondensator 26 gespeicherte elektrische Energie führt zu einem erneuten Hochsetzen des Stroms durch die Feldwicklung⁻6.

Da dieser Strom, wie vorher erwähnt, über den Widerstand 36 fließt, wird festgestellt, wann die von der Steuerschaltung 41 definierte Schwellenspannung überschritten wird und es kommt zum erneuten Triggern des Monoflops 82 mit der Folge des Abschaltens bzw. Sperrens des Mosfets 35.

Der Mosfet 35 wird ersichtlicherweise im Schalterbetrieb verwendet und er wird eine feste Zeit ausgeschaltet und eine variable Zeit lang eingeschaltet, wobei die Einschaltzeit festgelegt wird durch die Zeit, die der Strom durch die Erregerwicklung 6 braucht, um wieder auf den festgelegten Grenzwert anzusteigen.

Da der Freilaufstromkreis für die Feldwicklung 6 durch den Bremswiderstand 32 stark bedämpft ist, erfolgt hier weitgehend die Umsetzung der elektrischen Leistung in Wärmeleistung. Da außerdem der Strom im Freilauffall,von der Welligkeit einmal abgesehen, etwa genauso groß ist wie der Strom, der beim Abschalten des Transistors 35 erreicht wird, ist der Scheitelstrom durch den Bremswiderstand 32 immer etwa gleich hoch.Was sich im Verlauf der Bremszeit ändert, ist das Tastverhältnis, da der Strom in dem Bremswiderstand 32 bei der mit ausgezogenen Linien dargestellten Schaltung nur bei gesperrtem Mosfet 35 fließt. Infolge des mathematisch-elektrischen Zusammenhangs zwischen Tastverhältnis und Effektivwert des Stroms sinkt die von dem Bremswiderstand 32 in Wärme umgesetzte elektrische Leistung weniger schnell als proporional zur Drehzahl.

Der Vollständigkeit halber sei noch die Funktionsweise der Steuerschaltung 41 erläutert: Nach dem Anlegen der Versorgungsspannung an die Stromversorgungseingänge 45 und 46 wird der Kondensator 95 auf den entsprechenden Scheitelwert aufgeladen. Die Diode 94 verhindert eine Entladung des Kondensators 95 bei durchgeschaltetem Transistor 35.

Mit dem Aufladen des Kondensators 95 steht die Versorgungsspannung für die Stromquelle 81 sowie das Monoflop 82 zur Verfügung. Der nun mit Strom versorgte Feldeffekttransistor 96 beginnt einen Sourcestrom zu ziehen, da der Transistor 89 abgeschaltet ist, wodurch der Transistor 35 eine entsprechende positive Versorgungsspannung an seinem Gate erhält und aufgesteuert wird. Die Spannung an dem Gate des Transistors 35 steigt so lange an, bis die Spannung zwischen der Sourceelektrode und dem Gate des Transistor 35 ausreicht, damit durch die Serienschaltung der beiden Z-Dioden 98 und 101 ein Strom fließt, wodurch an der Z-Diode 98 ein Spannungsabfall entsteht, der zu einer negativen Gatevorspannung für den Transistor 96 führt. Der Transistor 96 steuert sich daraufhin weitgehend zu und es fließt nurmehr aus der Sourceelektrode des Transistors 96 der Versorgungsstrom über die Diode 102 zu dem Fensterdiskriminator 86 zuzüglich dem Ruhestrom.

Wenn nun infolge des durchgesteuerten Transistors 35 der Erregerstrom durch die Feldwicklung 6 weit genug angestiegen ist, bis er an dem Widerstand 36 einen Spannungsabfall erzeugt, der größer ist als die zum Durchsteuern des Transistors 84 notwendige Spannung wird der Transistor 84 durchgeschaltet. Hierdurch wird an Pin 2 des Fensterdiskriminators 86 ein nach null gehender Impuls erzeugt, der daraufhin das in bekannter Weise arbeitende Monoflop 86 triggert. Es gibt an Pin 3 ein Signal zum Durchsteuern des Transistors 89 ab, der daraufhin umgehend die Verbindungsstelle zwischen der Z-Diode 98 und der Z-Diode 101 auf das Bezugspotential der Leitung 34 zieht. Weil dabei nach wie vor Strom durch die Z-Diode 98 fließen kann, bleibt der Transistor 96 in dem vorher erwähnten weitgehenden Sperrzustand. Da außerdem der Versorgungsstrom für das Monoflop 82 nunmehr wegfällt, regelt der Transistor 96 bis auf seinen Ruhestrom zu. Die Stromversorgung für das Monoflop 82 kommt aus dem Kondensator 93, der sich wegen der Diode 102 nicht in unerwünschter Weise ebenfalls über den Transistor 89 entladen kann.

Der Transistor 89 entlädt nun über die in Rückwärtsrichtung leitende Z-Diode 98 die Gatekapazität des Transistors 35, der daraufhin in den Sperrzustand übergeht. In diesem Zustand fließt über die Diode 61 bzw. 104 der Freilaufstrom, der durch den Bremswiderstand 32 bedämpft ist.

Nach Ablauf der durch die zeitbestimmenden Bauelemente 88 und 87 festgelegten Haltezeit des Monoflops 82 kippt dieses in den Ursprungszustand zurück, in dem an Pin 3 keine Spannung mehr abgegeben wird, wodurch der Transistor 89 gesperrt wird. Es fällt augenblicklich der Strom durch die Z-Diode 98 weg. Die negative Gatevorspannung für den Transistor 96 verschwindet damit weitgehend. Der Transistor 96 beginnt zu leiten, wobei der Sourcestrom von der Transistorkennlinie und dem Spannungsabfall an dem Widerstand 97 bestimmt wird. Die Gatekapazität des Transistors 96 wird dabei über den Widerstand 99 entladen und es kommt wieder, wie vorhin erläutert, zum Erzeugen einer positiven Steuerspannung für den selbstsperrenden Mosfet 35. Dessen Gatekapazität wird, wie vorerwähnt, über den Transistor 96 aufgeladen, solange, bis die Gatespannung größer ist als die Nennwerte der beiden Z-Dioden 98 und 101. Wenn dieser Zeitpunkt erreicht ist, entsteht, wie erläutert, die negative Gatevorspannung für den Transistor 96, und zwar im wesentlichen an der leitenden Z-Diode 98. Der Transistor 96 wird dadurch entsprechend zugeregelt.

Ersichtlicherweise ist die Steuerschaltung 41 ein pulsweitenmodulierter Oszillator, bei dem die Zeitspanne, während der der Transistor 35 gesperrt ist, durch das Monoflop 82 festgelegt ist. Es spielt dabei keine Rolle, ob das Monoflop 82 retriggerbar ist oder nicht, da in jedem Falle nach dem Abschalten des Transistors 35 das Triggersignal an Pin2 verschwindet. Die Einschaltzeit des Transistors 35 ist dagegen variabel, womit sich die Taktfrequenz, mit der der Transistor 35 an seinem Gate angesteuert wird, während des Bremsvorganges verändert.

Obwohl bei der vorausgehenden Beschreibung immer davon ausgegangen wird, daß die Regelung des Bremsstromes unmittelbar mit dem Umschalten in dem Bremsbetrieb beginnt, werden im wesentlichen auch die erläuterten Vorteile errreicht, wenn diese Form der Regelung des Bremsstromes nicht unmittelbar mit dem Bremsbeginn, sondern erst etwas zeitverzögert einsetzt. Praktische Versuche haben gezeigt, daß bereits eine deutliche Verminderung der maximalen Belastbarkeit des Bremswiderstandes 32 erreicht werden kann, wenn das Zeitintervall, in dem die vom Bremswiderstand 32 umgesetzte Leistung weniger stark als linear über der Zeit fällt, ca. 50% der gesamten Bremszeit ausmacht.

**Patentansprüche**

1. Schaltungsanordnung (1) zum netzunabhängigen Bremsen von einen Anker (3) und einen Kollektor sowie eine geteilte oder ungeteilte Feldwicklung (6) aufweisenden Motoren (1) bis ca. 3 kW, mit einer Umschalteinrichtung (12) zum Verbinden der Feldwicklung (6) mit dem Anker (3) für den Bremsbetrieb, mit einem einen Steuereingang aufweisenden elektronischen Schalter (35), mit einer Steuerschaltung (41) zum gesteuerten, etwa periodischen Ein- und Ausschalten des elektronischen Schalters (35), die mit ihrem Ausgang an den Eingang des elekronischen Schalters (35) angeschlossen ist, um den Erregerstrom zu steuern, sowie mit einem als Festwiderstand ausgeführten Bremswiderstand (32), wobei im Bremsbetrieb ein Stromkreis geschaltet ist, der in Serie hintereinander zumindest den Anker (3), den beim Bremsen wirksamen Teil der Feldwicklung (6) und den elektronischen Schalter (35) enthält und wobei der Bremswiderstand (32) zu einem oder mehreren dieser Bauelemente parallelgeschaltet ist, dadurch gekennzeichnet, daß die Leistung, die von dem Bremswiderstand (32) in Wärme umgesetzt wird, reproduzierbar in einem Zeitintervall, das ca. wenigstens 20% der gesamten Bremszeit, vorzugsweise wenigstens 50% ausmacht, weniger stark als linear über der Bremszeit fällt, und daß bei durchgesteuertem elektronischen Schalter (35) der Bremswiderstand (32) mit dem beim Bremsen wirksamen Teil der Feldwicklung (6) nicht in Serie liegt.

2. Schaltungsanordnung nach Anspruch 1, dadurch gekennzeichnet, daß mit dem elektronischen Schalter (35) ein Stromfühler (36) in Serie liegt, der mit einem Eingang (43) der Steuerschaltung (41) verbunden ist, die beim Erreichen eines vorgegebenen Schwellwertes für den durch den Stromfühler fließenden Strom den elektronischen Schalter (35) ausschaltet.

3. Schaltungsanordnung nach Anspruch 1, dadurch gekennzeichnet, daß der Bremswiderstand (32) zu dem Anker (3) parallelgeschaltet ist und daß die Steuerschaltung (41) den Erregerstrom derart steuert, daß die von dem Anker (3) abgegebene Spannung zumindest in einem mit dem Bremsbeginn beginnenden Zeitintervall entsprechend weniger stark als proportional zu der Drehzahl des Ankers (3) fällt.

4. Schaltungsanordnung nach Anspruch 1, dadurch gekennzeichnet, daß der Bremswiderstand (32) zu der Serienschaltung aus dem Anker (3) und dem beim Bremsen wirksamen Teil der Feldwicklung (6) parallelgeschaltet ist und daß die Steuerschaltung (41) den Erregerstrom derart steuert, daß die von dem Anker (3) abgegebene Spannung zumindest in einem mit dem Bremsbeginn beginnenden Zeitintervall entsprechend weniger stark als proportional zu der Drehzahl des Ankers (3) fällt.

5. Schaltungsanordnung nach Anspruch 1, dadurch gekennzeichnet, daß der Bremswiderstand (32) zu dem elektronischen Schalter (35) parallelgeschaltet ist und daß die Steuerschaltung (41) den Erregerstrom derart steuert, daß die von dem Anker (3) abgegebene Spannung zumindest in einem mit dem Bremsbeginn beginnenden Zeitintervall entsprechend weniger stark als proportional zu der Drehzahl des Ankers (3) fällt.

6. Schaltungsanordnung nach Anspruch 1, dadurch gekennzeichnet, daß der Bremswiderstand (35) mit zumindest einer Diode (61, 104) in Serie liegt und daß die Serienschaltung aus der zumindest einen Diode (61, 104) und dem Bremswiderstand (32) zu dem beim Bremsen wirksamen Teil der Feldwicklung (6) parallelliegt.

7. Schaltungsanordnung nach Anspruch 1, dadurch gekennzeichnet, daß die Steuerschaltung (41) den Erregerstrom derart steuert, daß der Strom durch den Bremswiderstand (32) zumindest in einem mit dem Bremsbeginn beginnenden Zeitintervall entsprechend weniger stark als proportional zu der Drehzahl des Ankers (3) fällt.

8. Schaltungsanordnung nach Anspruch 1, dadurch gekennzeichnet, daß der Effektivwert der Spannung an dem Bremswiderstand (35) näherungsweise konstant gehalten ist.

9. Schaltungsanordnung nach Anspruch 1, dadurch gekennzeichnet, daß die Steuerschaltung (41) einen Tiefpaß oder Integrator (55, 56, 57, 71, 74) enthält, dem eine Spannung zugeführt wird, die zu der an dem Bremswiderstand abfallenden Spannung proportional ist und daß mittels dieses Tiefpasses oder Integrators (55, 56, 57, 71, 74) eine Schaltschwelle der Steuerschaltung (41) verändert wird.

10. Schaltungsanordnung nach Anspruch 9, dadurch gekennzeichnet, daß der Tiefpaß (55, 56, 57) eine an dem Eingang der Steuerschaltung (41) angeschaltete Parallelschaltung aus einem Widerstand (55) und einem Kondensator (56) enthält und daß diese Parallelschaltung andernends über wenigstens einen Widerstand (54, 57) mit einer Spannung beaufschlagt ist, die dem Spannungsabfall an dem Bremswiderstand (32) entspricht.

11. Schaltungsanordnung nach Anspruch 10, dadurch gekennzeichnet, daß die Steuerschaltung (41) einen Steuertransistor (48) enthält, dessen Steuereingang über den Tiefpaß (55, 56, 57) mit dem Eingang (43) der Steuerschaltung (41) verbunden ist.

12. Schaltungsanordnung nach Anspruch 10, dadurch gekennzeichnet, daß die Steuerschaltung (41) ein Zeitglied (49, 51, 52) enthält, durch das kurzzeitig bei Bremsbeginn die Schaltschwelle der Steuerschaltung (41) vermindert wird.

13. Schaltungsanordnung nach Anspruch 12, dadurch gekennzeichnet, daß das Zeitglied aus einer Parallelschaltung, bestehend aus einer Diode (49), einem Kondensator (51) und einem Festwiderstand (52),gebildet ist.

14. Schaltungsanordnung nach Anspruch 1, dadurch gekennzeichnet, daß die Steuerschaltung (41) sich an ihrem Ausgang wie ein Oszillator mit veränderlichem Tastverhältnis verhält, bei dem entweder die Periodendauer oder diejenige Zeit konstant ist, an der er an seinem Ausgang (42) ein Signal abgibt, das den gesteuerten elektronischen Schalter (35) in den ausgeschalteten Zustand überführt.

15. Schaltungsanordnung nach Anspruch 13, dadurch gekennzeichnet, daß die Steuerschaltung (41) durch den Vergleich des von dem Stromfühler (36) abgegebenen Signals mit einer Schaltschwelle synchronisiert bzw. getriggert wird.

16. Schaltungsanordnung nach Anspruch 15, dadurch gekennzeichnet, daß die Steuerschaltung (41) einen Integrator (71, 74) enthält, in den eine zu dem Spannungsabfall an dem Bremswiderstand (32) zumindest proportionale Spannung eingespeist wird, daß der Integrator diese Spannung mit einem Referenzwert vergleicht und die Differenz integriert und daß die integrierte Spannung die Schaltschwelle festlegt.

17. Schaltungsanordnung nach Anspruch 1, dadurch gekennzeichnet, daß der Beginn des Zeitintervalls zumindest im ersten Viertel der Bremszeit seit Bremsbeginn liegt, vorzugsweise im wesentlichen mit dem Bremsbeginn zusammenfällt.

Fig. 1

EP 0 551 909 A1

Fig. 2

Fig. 3

Fig. 4

EP 0 551 909 A1

## EINSCHLÄGIGE DOKUMENTE

EP 93100503.7

| Kategorie | Kennzeichnung des Dokuments mit Angabe, soweit erforderlich, der maßgeblichen Teile | Betrifft Anspruch | KLASSIFIKATION DER ANMELDUNG (Int Cl ) |
|---|---|---|---|
| Y | DE - A - 3 636 555 (SCHRÖCKER) * Ansprüche 1,2; Fig. 4,6 samt Text * -- | 1-8, 14-17 | H 02 P 3/12 |
| Y | DE - A - 3 539 841 (SCHRÖCKER) * Ansprüche 1,4; Spalte 5, Zeilen 1-47; Spalte 6, Zeilen 28-41; Spalte 9, Zeile 52 - Spalte 10, Zeile 29; Spalte 13, Zeilen 17-27; Spalte 13, Zeile 46 - Spalte 15, Zeile 2; Fig. 1-5 * -- | 1-8, 14-17 | |
| A | DD - A - 265 267 (LEIPZIG) * Gesamt * ---- | 1 | |

RECHERCHIERTE SACHGEBIETE (Int Cl )

H 02 P 3/00

Der vorliegende Recherchenbericht wurde für alle Patentansprüche erstellt.

| Recherchenort WIEN | Abschlußdatum der Recherche 15-03-1993 | Prüfer KUTZELNIGG |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 62